# EUROPEAN PATENT APPLICATION

(11) **EP 3 839 802 A1**
(43) Date of publication of application: **23.06.2021**
(21) Application number: 19216603.1
(22) Date of filing: 16.12.2019
(51) Int. Cl.: G06K 9/00, G06T 7/292, H04N 5/225, H04N 5/232, H04N 13/239

(54) **ANONYMIZED MULTI-SENSOR PEOPLE TRACKING**

(71) Applicant: Jetpack, 1040 Etterbeek (BE)
(72) Inventor: Krings, Raphaël, 1040 Etterbeek (BE); Crousse, Pierre-François, 1040 Etterbeek (BE); Krings, Gautier, 1040 Etterbeek (BE); Douieb, Karim, 1040 Etterbeek (BE)
(74) Representative: Calysta NV

(57) **Abstract**

System for anonymously detecting a plurality of subjects in an environment, said system comprising: A sensor module (S110) comprising at least one sensor (S112, S113, S114), wherein the at least one sensor (S112, S113, S114) comprises a low resolution camera (S112)for capturing images of the environment (100); and a processing means (S120, S130) configured to detect subjects in the environment based on the images of the environment captured by the camera (S112) of the sensor module (S110).

## Description

### Technical Domain

The present invention relates to a system for automated detection of subject, in particular of humans in an environment, while keeping the identity of the people being detected hidden for respecting their privacy.

### Technological Background of the invention

It is known to tracking of moving subjects in an environment, especially the movement of human beings in a closed environment such as a shop. Such a shop needs to optimize their structure to ensure a satisfying shopping experience to their clients, which will improve sales and rentability. An example of such an optimization would be to detect the most common routes used by said clients when moving through the shop and making sure the most attractive goods are positioned on this route. In order to map these routes, the clients need to be identified individually and data regarding their route through the store needs to be stored. This optimization however depends on the quality of the used tracking solution for the subjects.

Currently, there are several known tracking systems.

One tracking solution uses Bluetooth beacons of the smartphones of the subjects. These beacons are capable of detecting nearby devices having activated their Bluetooth functionality. However, such beacons are not capable of tracking the movement of the subject related to the device, only to detect its presence. As an additional drawback, subjects without a Bluetooth-enabled device cannot be detected and subjects having more than one Bluetooth-enabled device will create false positives. A similar solution detects the devices of the subjects via the Wi-Fi network in place. This solution has similar drawbacks as Bluetooth beacons. Thus, these beacon-based solutions do not provide a good position tracking of the subjects in the environment and do often not cover all subjects.

Another solution uses security cameras or other high-definition cameras, in conjunction with image recognition techniques as disclosed for example in WO2018/152009A1, US2019/0205933A1 and EP2270761A1. These techniques require a substantial amount of computation power and face privacy related traits such as the European General Data Protection Regulation (GDPR). GDPR requires the permission of the person itself to collect personalized data (such as video) and would imply the store manager to ask every single client permission to be filmed in order to have its route tracked during the visit of the store. Therefore, most current state of the art solutions is not compatible with the current privacy rules.

Some solutions use dedicated people tracking sensors distributed over the environment. In one embodiment using high-resolution cameras in the tracking sensors, the privacy issue is solved by performing image processing in the tracking sensor itself so that only an anonymized map with detected subjects is given out from the tracking sensor. However, this solution requires complex image processing chips in each tracking sensor which makes the sensors complex and expensive. In addition, each tracking sensor requires a high computational power. In another solution, other sensor types are used such as infrared (IR) cameras or such as 3D cameras. Infrared cameras might not be problematic for privacy, however it is not reliable enough to detect all subjects without a high number of false positives and without mixing them up, when they come close to each other. 3D cameras on the other side have a similar problem as the high-resolution optical cameras.

The object of the invention is to detect/track the position of subjects inside an environment with a high quality while avoiding to collect and/or store personal information about the subjects during the process and/or while reducing the computational power needed. The difficulty hence resides in differentiating individuals one from another without referring to privacy-related traits such as face recognition or other techniques of this kind.

### Brief summary of the invention

The invention refers to a system for anonymously detecting a plurality of subjects in an environment, said system comprising: A sensor module comprising at least one sensor for collecting sensor data of the environment; a processing means configured to detect subjects in the environment based on the sensor data of the environment.

The invention refers to an environment with the system previously described.

The invention refers to a first method for anonymously detecting a plurality of subjects in an environment, said first method comprising the steps of: collecting with a sensor module with at least one sensor data of the environment; detecting in a processing means subjects in the environment based on the sensor data of the environment.

The invention refers to a second method for anonymously detecting a plurality of subjects in an environment, said second method comprising the steps of: receiving from a sensor module with at least one sensor in a processing means sensor data of the environment; detecting in the processing means subjects in the environment based on the sensor data of the environment.

The invention refers to a (non-tangible) computer program for anonymously detecting a plurality of subjects in an environment, said computer program being configured to perform the steps of the above-described second method, when executed on a processing means.

The invention refers to a (non-tangible) computer program product for anonymously detecting a plurality of subjects in an environment, said computer program product storing instructions configured to perform the steps of the above-described second method, when executed on a processing means.

The invention refers to a processing means configured to perform the steps of the above-described second method.

The invention refers to a sensor module for anonymously detecting a plurality of subjects in an environment, said sensor module comprising at least one sensor for collecting sensor data of the environment; a processing means configured to detect subjects in the environment based on the sensor data of the environment.

The object is solved by a system, environment, first method, second method, computer program, computer program product, processing means and/or sensor module as described above in combination with one or more of the following embodiments:
In one embodiment, the at least one sensor comprises a low-resolution camera for capturing a low-resolution image of the environment. In one embodiment, the sensor data comprises a low-resolution image of the environment. In one embodiment, the processing means retrieves a feature of the subject from the low-resolution image of the environment to detect and/or anonymously identify the subject in the environment. This embodiment has the advantage that the low resolution of the images helps significantly to anonymously identify the subjects (i.e. to distinguish them from each other) but avoids that the person or true identity behind the subject can be retrieved from the images. Therefore, the sensor data of the low-resolution camera are not relevant for privacy rules.

In one embodiment, the at least one sensor comprises an IR camera for capturing an IR image of the environment. In one embodiment, the sensor data comprises an IR image of the environment. In one embodiment, the processing means retrieves an IR feature of the subject from the IR image of the environment to detect and/or anonymously identify the subject in the environment.

In one embodiment, the at least one sensor comprises a 3D camera for capturing a 3D image of the environment. In one embodiment, the sensor data comprises a 3D image of the environment. In one embodiment, the processing means retrieves a feature of the subject from the 3D image of the environment to detect and/or anonymously identify the subject in the environment.

In one embodiment, the at least one sensor comprises an IR camera and one or both of a 3D camera and a low-resolution camera for capturing a low-resolution image of the environment. In one embodiment, the sensor data comprises an IR image of the environment and one or both of a 3D image of the environment and a low-resolution image of the environment. In one embodiment, the processing means retrieves at least one first feature of the subject from the IR image and at least a second feature from the low-resolution image and/or the 3D image. The combination of the IR camera with a low-resolution optical camera and/or a 3D camera proved to be very reliable and reduces the processing power. The fact to use sensor data from different sources allows using computationally simple features, which however are reliable due to their independence. Thus, if the feature of one source fails for detecting and/or anonymously identifying the subject, the remaining features of other sources can guarantee a stable and reliable detection quality.

In one embodiment, the processing means is configured to detect an event for a certain subject, wherein the event has an associated event location in the environment and an associated event time, wherein the event is associated to the subject based on the event and based on the location of the subjects in the environment at the time associated with the event. By connecting events to anonymous subjects, it is suddenly possible to create connections between databases and anonymous subjects which normally is not possible for anonymous subjects. The data from the database could be anonymous as well but be connected in some way with the subject or the event of the subject. The data could be also non-anonymous so that the itinerary could be re-connected to an identity of the person, e.g. for surveying a certain region of the environment, for which there must be an access control. The data from the database could also be a group of people, e.g. the persons of a certain flight, an employee, a person with a certain access control level. Therefore, the output of the subject detection or tracking can be used in big data analysis and machine learning. In particular for machine learning, the events are providing an important automated feedback for improving the machine learning algorithm. The machine learning could comprise also artificial intelligence or deep learning.

Further embodiments are described in the description and in the dependent claims.

### Drawings

Figure 1 shows an exemplary embodiment of a retail shop as an environment.
Figure 2 shows a plurality of sensor modules distributed over the environment of Fig. 1.
Figure 3 shows the plurality of sensor modules and a plurality of sub-regions distributed over the environment of Fig. 1.
Figure 4 shows an exemplary schematic embodiment of the system of the invention.

In the drawings, the same reference numbers have been allocated to the same or analogue element.

### Detailed description of the invention

Other characteristics and advantages of the present invention will be derived from the non-limitative following description, and by making reference to the drawings and the examples.

The invention refers to a system, method and/or computer program for detecting a plurality of subjects in an environment, preferably for tracking the plurality of subjects in the environment, preferably for anonymously detecting/tracking the subjects in the environment.

Subjects are preferably humans or persons. However, the application could be also applied to different subjects like animals or certain kind of objects. The system could be configured to distinguish between different type of subjects, e.g. distinguished by their age, e.g. adults and minors, e.g. adults, minors below a certain height or age and minors above a certain height or age. The subjects could also be objects.

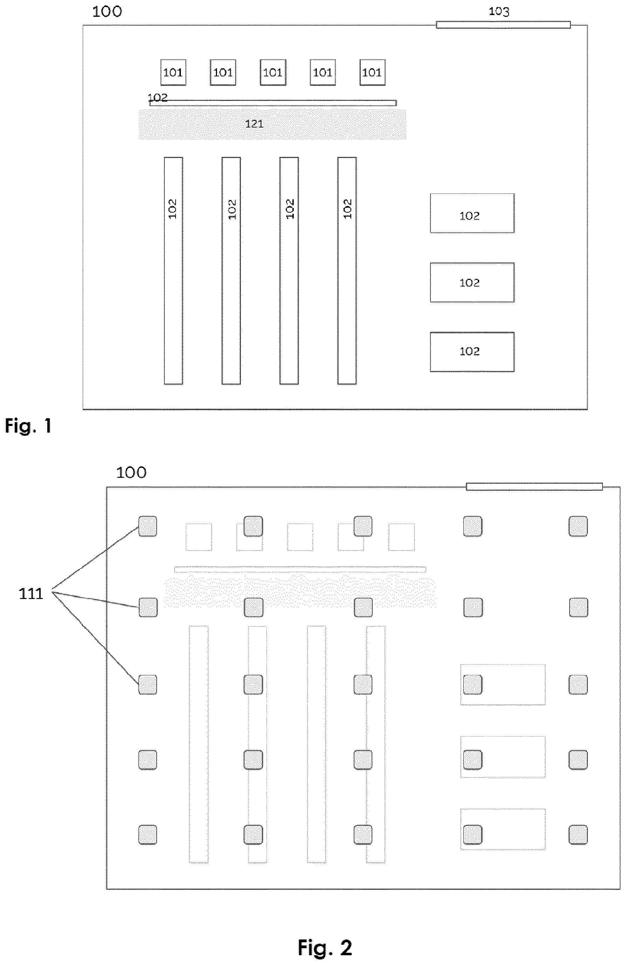

The environment defines the (complete) area in which the subjects shall be detected (also called area under monitoring). The environment is preferably a closed environment. Examples are retail shops, airports, amusement parks or other types of (public) environments with some sense of traffic in which it is of interest for the authorities managing the environment to understand how the disposition of the place is used by visitors. The environment can refer to the whole airport or only to certain zones of interest of the airport, such as the security gates or the retail area of the airport. The (closed) environment comprises preferably a ceiling. However, it is also possible to have environments without a ceiling such a certain open-air amusement parks. An example of a retail shop 100 as such an environment is shown in Fig. 1. The environment 100 comprises preferably borders over which subjects cannot move. Such borders comprise preferably the external borders of the environment 100 which encloses the environment. The environment 100 comprises normally a gate zone through which subjects can enter and/or exit the environment 100. Such a gate zone can be a door, passageway, gate, an elevator, stairs etc. The external borders comprise normally a gate zone 103 through which the subjects can enter and/or exit the environment. However, it is also possible that the external borders are fully closed and there is a gate zone within the environment 100 (not shown in Fig. 1). The gate zones can be for entering and exiting subjects or exclusively for one or the other (in the latter case at least two different gate zones are required). The borders could comprise internal borders like the shelves 102, the cashiers 101, etc. The environment 100 can define further certain functional objects of the environment such as shelves 102, cashiers 101, etc. to define the layout of the shop. The different functional objects (of the same type) could have identifiers which could be used in the analytics processing (see later) and/or for displaying the environment 100 on a display (see later) and/or for defining the borders of the environment 100. The environment 100 could define certain zones of interest, e.g. in Fig. 1 the zone 121 in front of the cashiers 101. In one embodiment, the environment 100 defines a plurality of sub-regions 100.i with the index i being an integer between 1 and n with n being the number of sub-regions 100.i. In Fig. 1 n=6. Preferably, all sub-regions 100.i together cover the (entire) environment 100. Neighbouring sub-regions 100.i can overlap with each other.

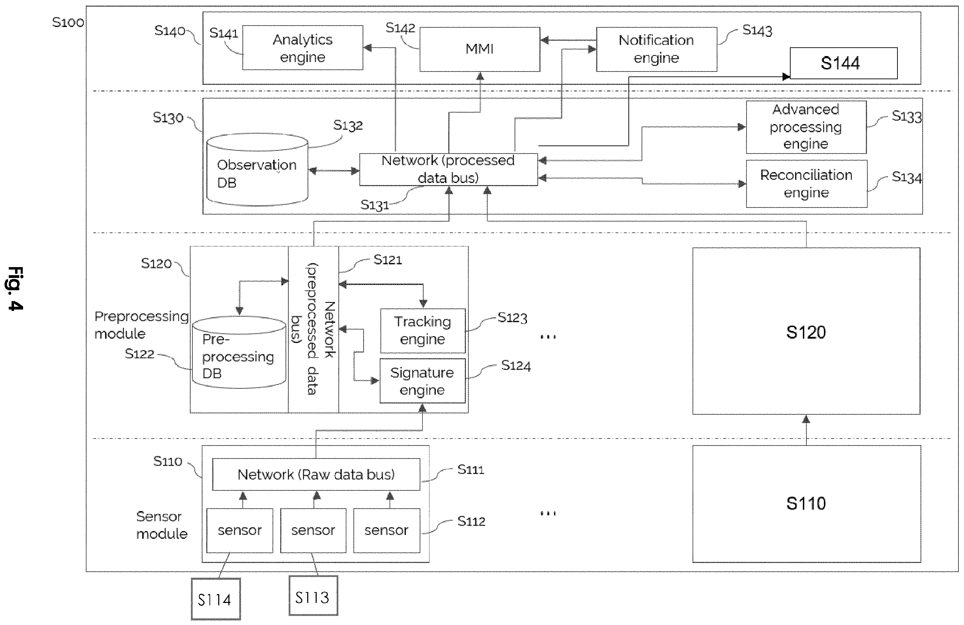

Fig. 4 shows an exemplary embodiment of the system S100 for detecting subjects in the environment. The system S100 comprises a processing means and at least one sensor module S110.

The sensor module S110 comprises at least one sensor S112, S113, S114. The at least one sensor S112, S113, S114 is preferably configured to sense sensor data of (a sensor region of) the environment 100 allowing the detection of the position of subjects in the (sensor region of the) environment 100. The sensor region of a sensor module S112 is the part of the environment 100 covered by the sensor module S110, i.e. the part of the environment 100 in which sensor data of subjects can be collected in the environment 100 by this sensor module S110. In the case of at least two sensors S112, S113, S114, the sensor region of the sensor module S112 is preferably the part of the environment 100 covered by all sensors S112, S113, S114 of the sensor module S110. The sensor data retrieved by one, some or all of the at least one sensor S112, S113, S114 are preferably image data, for example two-dimensional data, like image pixel data, or three-dimensional image data, like voxel image data.

The at least one sensor S112, S113, S114 (each, one or some of them) captures the sensor data over time. This means normally that the at least one sensor S112, S113, S114 captures in subsequent time or sample steps (normally with fixed intervals in between) one sensor data set for the respective point in time or sample step. The sensor data set is preferably an image. The at least one sensor S112, S113, S114 provides thus for each sensor a stream of sensor data sets or images (also called video). The sensor module S110 could have a storage for buffering (recording for a short time for technical reasons, not for the purpose of storing them) the sensor data before sending them to the processing means. The buffering could also comprise the case of storing the sensor data for the time during which a connection to the processing means is interrupted. Preferably, the sensor data are not stored in the sensor module S110 after the sensor data have been sent to the processing means. The sensor module S110 could also work without a storage for the sensor data. Preferably, the sensor module S110 sends the sensor data to the processing means immediately after the sensor data have been collected by the at least one sensor S112, S113, S 114.

The at least one sensor S112, S113, S114 comprises preferably an IR camera S114. The IR camera S114 is configured to capture IR images of the sensor region of the sensor module S110 and/or of the IR camera S114 (over time).

The at least one sensor S112, S113, S114 comprises preferably a three-dimensional (3D) camera S113. The 3D camera S114 is configured to capture 3D images of the sensor region of the sensor module S110 and/or of the 3D camera S113 (over time). The 3D camera is preferably a time of flight camera. However, different 3D cameras can be used. Preferably, the sensor module and/or the 3D camera is preferably arranged such in the environment that a voxel recorded with the 3D camera corresponds to a space of the environment larger than 5mm, preferably than 1cm, preferably than 3 cm, preferably than 5 cm. The space of the environment of x corresponds preferably a cube in the environment with the three side lengths of x.

The at least one sensor S112, S113, S114 comprises preferably an optical camera S112. The optical camera S112 is configured to capture optical images of the sensor region of the sensor module S110 and/or of the optical camera S112 (over time). Preferably, the optical camera S112 captures optical images of the sensor region in the frequency or wavelength spectrum of the visible light. The optical camera S112 comprises preferably a digital image sensor, e.g. a CMOS sensor. The resolution of the optical camera S112 and/or of the digital image sensor is defined by the number of pixels of the optical camera S112 and/or of the digital image sensor. Preferably, the optical camera S112 is a low-resolution camera. The resolution of the camera S112 is preferably so low that biometric features which allow to identify the identity of a person (not only to distinguish them from each other) can not be retrieved from the images captured by the optical camera S112. Preferably, the resolution of the optical camera S112 and/or of its image sensor is preferably lower than 0,5 Megapixels, preferably lower than 0,4 Megapixels, preferably lower than 0,3 Megapixels, preferably lower than 0,2 Megapixels, preferably lower than 0,1 Megapixels, preferably lower than 0,09 Megapixels, preferably lower than 0,08 Megapixels, preferably lower than 0,07 Megapixels, preferably lower than 0,06 Megapixels, preferably lower than 0,05 Megapixels, preferably lower than 0,04 Megapixels, preferably lower than 0,03 Megapixels, preferably lower than 0,02 Megapixels, preferably lower than 0,01 Megapixels (10000 Pixels), preferably lower than 0,005 Megapixels (5000 Pixels). In one realisation, the optical sensor has a resolution of 32x32 pixels resulting in 1024 Pixels of the image sensor which proved sufficient for the subject detection in combination with another sensor like the IR sensor. Such a low-resolution sensor as a very low power consumption and avoids any problems with the privacy of the content of the images. Preferably, the resolution, position and/or orientation of the optical camera S112 and/or of the sensor module S110 is preferably chosen such that the optical camera S122 provides a resolution per square meter of the environment 100 lower than 50.000 Pixels per square meter of the environment covered (Pixels/sqm), preferably lower than 40.000 Pixels/sqm, preferably lower than 30.000 Pixels/sqm, preferably lower than 20.000 Pixels/sqm, preferably lower than 10.000 Pixels/sqm, preferably lower than 5.000 Pixels/sqm, preferably lower than 4.000 Pixels/sqm, preferably lower than 3.000 Pixels/sqm, preferably lower than 2.000 Pixels/sqm, preferably lower than 1.000 Pixels/sqm, preferably lower than 500 Pixels/sqm. If the example of the optical camera S112 with a resolution of 1024 Pixels is arranged to cover a field of 3m x 3m leading to 113 Pixels per sqm, there is absolutely now risk of privacy violations in the content of the images of the optical sensor S112 and the power consumption is significantly reduced. In one embodiment, the resolution of the optical camera S112 can be configured in the sensor module S110. This might have the advantage that the resolution can be configured in dependence of the height of installation, the light conditions, etc. Such an optical camera S112 with a configurable resolution could be provided by a digital image processor with a configurable resolution filter or processor which reduces the resolution based on the configuration of the sensor module S110. The configuration could be made by a hardware configuration means in the sensor module or by a software configuration means which could be controlled by the processing means. In the latter case, the optical camera S112 of the sensor module S110 could be configured by the processing means by a calibration procedure which guarantees that no biometric feature of the subjects passing in the sensor region could be extracted.

The sensor module S100 comprises preferably an interface to send the sensor data from the at least one sensor S112, S113, S114 to the processing means. Preferably, the sensor module S100 is realised as a sensor unit, i.e. a distinct device from another device comprising (at least part of) the processing means such as a processing unit or a pre-processing unit. The sensor module or the sensor module S110 is preferably connected to the processing means, the processing unit or the pre-processing unit to send the sensor data, preferably the raw data of the at least one sensor S112, S113, S114. The connection could be via a cable, e.g. Ethernet, LAN, etc. or wireless, e.g. Bluetooth, WLAN, LOLA, WAN, etc. Considering that the sensor data do not contain privacy problematic content, it is not necessary that the connection is encrypted which safes a lot of computational power. The sensor module S110 is preferably configured to send the sensor data in real time to the processing means.

The three presented sensors S112, S113, S114 in the sensor module S110 are advantageous, because they allow to retrieve data about the subjects in the sensor region which allows to distinguish the subjects from each other, i.e. to anonymously identify the subjects, without recording data of the subjects which could be used to identify the subjects. One of those three sensors could be used in the sensor module S110 alone or in combination with other sensors. However, it showed that a combination of at least two of the trees described sensors S112, S113, S114 significantly improve the detection quality of the subject, i.e. to reliably anonymously identify the subjects. In particular, the combination of the IR camera S114 and one or two of the optical cameras and the 3D camera proved to be very reliable. Therefore, notwithstanding the absence of classical identifiers such a face recognition, the combination of the described sensors provides a reliable detection quality. In particular the combination of all three sensors S112, S113, S114 proved to be very reliable.

The system S100 comprises preferably a plurality of sensor modules S100. The above description of the sensor module S100 applies for all sensor modules S100 of the system S100. Preferably, all sensor modules of the system S100 are equal. The number of sensor modules S110 required depends on the size of the environment 100. The sensor modules S110 are distributed over the environment 100 to cover the (complete) environment 100 or at least the part of the environment which is of interest for the monitoring. The sensor modules S110 are preferably distributed such that the sensor regions of all sensor modules S110 cover the (complete) environment 100 or at least the part of the environment which is of interest for the monitoring. The sensor regions can overlap with neighbouring sensor regions. Fig. 2 shows an exemplary embodiment for the distribution of the sensor modules S110 over the environment 100. The sensor modules S110 are preferably mounted such that the direction of view of the at least one camera, preferably of all cameras of the at least one sensor S112, S113, S114 of the sensor module S110 are arranged vertically facing downwards. Preferably, the at least one sensor module S110 on the ceiling of the environment 100. However, it is also possible to mount the sensor modules S110 on respective supports, e.g. if the environment has no ceiling or the ceiling is too high. In another embodiment, it is also possible to mount the sensor modules S110 so that the direction of view of the camera(s) is horizontal. However, this has the disadvantage that some subjects might be covered by other subjects.

The processing means is configured to detect subjects in the environment 100 based on the sensor data captured by the at least one sensor of the at least one sensor module S110 from the sensor regions covering the environment 100. The detection of a subject in the image(s) is preferably based on one or more features retrieved from the image(s). Preferably, the detection of a subject is based on two or more features retrieved from the image(s) of the at least one sensor S112, S113, S114 (subsequently called feature vector without limitation of the invention). The feature vector comprises preferably one feature of each of the at least two sensors S112, S113, S114 of the sensor module S110. Example features retrieved from the IR images are the average temperature of the subject or the diameter of the heat point representing the subject. Example features retrieved from the 3D images are the height of the subject, the vector describing the contour of the person (as seen from above). Example features retrieved from the optical images are the average colour of the detected subject. Maybe other or additional features may be used for the rough detection where a subject is in the images.

The processing means is further configured to anonymously identify the subjects detected in the environment 100 based on the sensor data, in particular based on the at least one feature, preferably on the feature vector of the subject. The feature vector of a subject provides a kind of signature of the subject which allows to anonymously identify the subject in the environment, i.e. each subject can be distinguished (at any time) from the other subjects in the environment without the need of features which allow to identify the person behind the subject and/or which require according to some privacy rules the agreement of the subject. The anonymous identification of the subject is preferably based on a probabilistic approach such that when one or few features of the feature vector of the subject change, the subject can still be anonymously identified. This can be realised with a high reliability based on the location of the subject, when the one or few features of the feature vector of the subject change. An (anonymous) identifier can be associated to each subject anonymously identified.

The processing means is preferably configured to track a (or each) subject identified in the environment. The tracking of the (or each) subject in the environment 100 gives the position of the (or each) subject over time. Such a time-resolved itinerary allows to have the information of the itinerary in the environment of each subject and its time spent at certain locations or zones.

The processing means is preferably configured to determine the actual position of the subjects in the environment 100 at the actual point of time. Thus, the processing means can determine the position of the subjects in the environment 100 in real time.

The processing means could comprise an advanced processing means or engine S133 for computing advanced measures regarding the subjects. The advanced processing means S133 is preferably configured to compute the real time measures retrieved from the real time detection or tracking of the subjects in the environment 100. One example for such an advanced subject measure is the number of subjects being at a certain point of time, e.g. at the actual time, in a zone of interest of the environment 100, e.g. the zone 121 in front of the cashiers 101. Another example for such and advanced subject measure could be the average time the subjects statistically spend in a location, a certain zone or in the environment for a certain period of time. This can be shown in a map of the environment showing the average time spent at each location as an intensity as in a heat map.

The processing means could comprise an event detector S144. The event detector could detect an event for a certain subject. The event is associated with a location in the environment 100 and a time. The event can be for example a ticket at one of the cashiers 101 and the location of the environment 100 associated with the event can be the location of this cashier 101 in the environment. The event detector S144 could associate the event to the subject based on the event and based on the location of the subjects in the environment at the time associated with the event. The event detector S144 could associate the event to the subject based on subject being located at the time associated with the event at the location in the environment 100 being associated with the event. In the above example, the subject being at the time associated with the event at the cashier 101 which created the ticket must be associated with the ticket. This allows to associate further data related to the event to the subject. In the above-mentioned example maybe the items bought or the price spent or others. This event detector is very important to get an automatic feedback on the subjects with a higher granularity than yes or no. Such an automated feedback is very important for analysing the results produced in the processing means, e.g. for using the data of the subject detection and/or tracking in machine learning analytics. Another example of an event could be a detector for a badge. The employees need to badge for time stamping their work or for accessing a certain area. The badging would be the event. By connecting the anonymous subject at the position of the badge-detector in the environment 100 at the time of the badging event, the anonymous subject and/or its itinerary can be connected with the non-anonymous person identified with the badge in a database or with an anonymous category of subjects in a database. This allows to identify for example certain categories of subjects which shall not be considered for certain analysis. Another example for an event could be the scan of the boarding pass before boarding the plane and/or before passing the security check in an airport. This allows to connect the itinerary of a person with a certain flight or location of the flight. If the event is the scan of the boarding pass before passing the security check and the data from the database is any identifier of the boarding pass (e.g. the ticket or boarding pass number, the seat number, the name of the person traveling), the system could calculate from the corresponding identifier of the boarding pass the location of the subject connected with the event or boarding pass in the environment, the distance or time of the person to get to a gate. This allows airlines closing a gate with the decision, if it makes sense to wait for a person missing for boarding the plane. In addition, this allows to get for certain applications the identity of a person, even if the sensor module S112 gives no personal identity about the subjects detected.

The processing means could comprise analytics means or engine S141. The analytics means are configured to analyse and/or further process the information about the subjects detected in the environment 100, the information about the position over time of the subjects tracked in the environment 100 and/or the results from the advanced processing means S133. The analytics means S141 is preferably configured to compute measures which need not or cannot be computed in real time. The analytics means S141 could determine based on a plurality of subjects, based on the event detected for each subject and based on the tracked itinerary of each subject conclusions about the best location of the environment 100 (e.g. for exposing products) or about a ranking of the locations of the environment 100.

The processing means could comprise a notification means or engine S143 for creating notifications based on the results from the detection of subjects or from the tracking of subjects. An example for a notification created based on the results from the detection or tracking of the subjects could be a notification created from the results of the advanced processing means S133 or of the analytics means S141. An example could be that a notification, e.g. an alert, is created, when the number of subjects detected in a zone of interest increases above a threshold or the (average) waiting time of the subjects increases above a threshold. The zone of interest could be the zone 121 in front of the cashiers 101 with the waiting zone of the clients. This allows the shop manager to react immediately, if the queue or the waiting time for the clients gets to long. The threshold could be selected also depending on the number of open cashiers 101. Another notification could be created, if a subject enters in a zone of interest in which it is not allowed to enter. There are many more possibilities for notifications.

The processing means could comprise an output interface, e.g. a man-machine-interface (MMI) S142. The output interface could be a display such that the results computed in the processing means, the analytics means S141, the notification means S143 and/or the advanced processing means S133 can be shown on a display, e.g. the current map of the environment with the detected subject. The output interface could however also be a signal interface through which the results are given out, e.g. an interface to a network, e.g. the internet. The output interface could further output notifications of the notification means S143. The processing means could further comprise an input interface for receiving request or other information, e.g. for configuring the system S100 for the environment. The input interface could be the MMI S142.

The processing means can be realized by any kind of processing means having the described functionalities. The processing means could be a computer, a specialized chip, a system comprising at least two sub-processing units like in cloud computing, as in distributed processing, as in data processing centres. The processing means could be completely or partly in a central processing unit or could be completely or partly distributed over the sensor modules S110 or over intermediate processing units or modules each responsible for the processing of the sensor data of a subset of sensor modules S110.

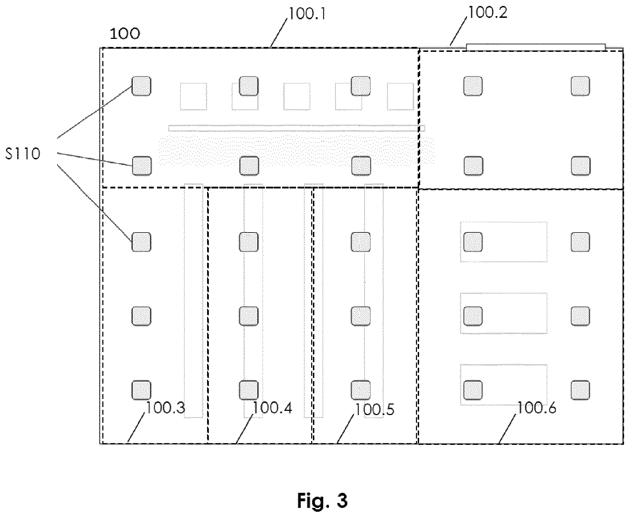

Preferably, the processing means comprises at least one first processing module S120 (also called pre-processing module) for pre-processing the data received from a subset of the sensor modules S110 of the system S100 and a second processing module S130, S140 for further processing the preprocessed data of the at least one pre-processing module S120. The sensor region(s) of each subset of sensor modules S120 define a sub-region of the environment 100.i as shown exemplarily in Fig. 3. Preferably, the subset of sensor modules S110 connected with one of the at least one pre-processing module S120 comprise at least two sensor modules S110. However, it is also possible that only one sensor module S110 is connected to one pre-processing module S120. Preferably, the pre-processing module S120 is realised in a pre-processing unit, i.e. a device being distinct from the sensor unit or sensor module S110. This allows to group the pre-processing for a subset of sensor modules S110 in one pre-processing unit S120. For large environments, the system S100 comprises at least two sub-sets of sensor modules S110, wherein each subset of sensor modules S110 are connected with a different pre-processing module S120 or pre-processing unit. Even if it is preferred to realise the pre-processing module S120 as a hardware device, i.e. as the pre-processing unit, it would also be possible to realize the pre-processing module S120 as a software module in a central processing unit. In the latter case, the central processing unit could process the pre-processing for different sub-sets of sensor modules S110 in parallel. Each pre-processing module S120 is configured to receive the sensor data of the at least one sensor module S110 of the subset of sensor modules associated/connected with the pre-processing module S120 and is configured to detect subjects in the sub-region 100.i of the pre-processing module S120, to anonymously identify the detected subjects and/or to track the subjects in the sub-region 100.i of the pre-processing module S120 based on the received sensor data. Therefore, the pre-processing module S120 comprises preferably a subject detection/identification means S124 (also called signature engine) for configured to detect the position of each subject in the sub-region 100.i of the pre-processing module S120 and to anonymously identify the detected subjects (for a certain point in time). Preferably, the signature engine S124 gives out the positions and feature vectors of each subject detected in the sub-region 100.i for the certain point in time. This is preferably done sequentially, preferably periodically, for subsequent points in time. The pre-processing module S120 comprises preferably a tracking means S123 or tracking engine for tracking the subjects in the sub-region 100.i of the pre-processing module S120 based on the output from the signature engine S124, in particular based on the position and feature vector of each subject in the sub-region 100.i for subsequent points in time. In one embodiment, the pre-processing module S120 or the signature engine S124 combines the images of the sensor region of each sensor module S110 to a combined image of the sub-region 100.i and detects and anonymously identifies the subjects in the sub-region 100.i based on the combined image of the sub-region 100.i. In another embodiment, the pre-processing module S120 or the signature engine S124 detects and anonymously identifies the subjects in each sensor region based on the image of the respective sensor region to create an detection and identification output for each sensor region and combines then the detection and identification output of all sensor regions of the sub-region 100.i to obtain the combined detection and identification output for the sub-region 100.i. The modular approach with the number of pre-processing modules S120 used depending on the number of sensor modules S110 used in the environment is preferred. Nevertheless, it is also possible to do the pre-processing in only one pre-processing module for all sensor modules S110 of the environment, then preferably in a central processing unit. Thus, the pre-processing module(s) S120 or pre-processing unit is preferably an intermediate device arranged (hierarchically) between the sensor modules S110 or sensor units and the central processing unit.

The pre-processing output of the/each pre-processing module S120 is sent to the second processing means. The pre-processing output of a pre-processing module S120 is preferably the detected, anonymously identified and/or tracked subject in the sub-region 100.i of the respective pre-processing module S120. Preferably, the pre-processing output for a certain point in time is the position of the subject(s) detected and anonymously identified in the sub-region 100.i. Preferably, the pre-processing output for a certain point in time is the position and the features vector of the subject(s) detected in the sub-region 100.i. The pre-processing module S120 sends preferably the processing output of subsequent time points to the second processing means. The second processing means is preferably configured to receive the pre-processing output of each sub-region 100.i from each pre-processing module S120 and to detect and/or track the subjects in the environment 100 by combining the pre-processing output(s) of the sub-regions 100.i. This is done preferably in a reconciliation means or engine S134. The output of the reconciliation engine S134 is preferably the detected, anonymously identified and/or tracked subject(s) in the environment 100. Preferably, the output of the reconciliation engine S134 for a certain point in time is the position of the subject(s) detected and anonymously identified in the environment. Preferably, the pre-processing output for a certain point in time is the position and an identifier of the subject(s) detected in the environment. The reconciliation engine S134 outputs preferably the output of subsequent time points. The output can be used by the advanced processing engine S133, the analytics engine S141, the notification engine S143, the event detector S144 for further processing, in particular for real time processing.

The pre-processing module S120 could comprise a storage S122. The storage S122 is preferably configured to store sensor data received from the sensor modules S110 connected to the pre-processing module S120 (at least until the sensor data are processed). The storage S122 is preferably configured to store pre-processing output data to be output to the second processing means. The storage S122 is preferably configured to store the pre-processing output of at least one previous processing step, i.e. the previous sampling time, for improving the detection and/or tracking of the subjects based on the position of the anonymously identified subjects at the at least one previous processing step.

The second processing means could further comprise a storage. Preferably, the storage S132 stores the subjects detected, anonymously identified and/or tracked (over time) in the environment 100, i.e. the storage S132 stores the output of the reconciliation engine S134. This allows to use the data about the subjects detected, anonymously identified and/or tracked (over time) in the environment 100 at a later point in time for further analysis, e.g. by the advanced processing engine S133, the analytics engine S141, the notification engine S143, the event detector S144 for further processing. The storage S132 could further be used to buffer the pre-processing output(s) from the pre-processing module(s) S120. Preferably, the pre-processing output(s) are removed from the storage S132, once they have been processed in the second processing means, in particular in the reconciliation engine S134.

The second processing means in the shown embodiment comprises preferably two modules S130 and S140. The first processing module S130 receives the pre-processing output(s) from the at least one pre-processing modules S120 and process this output to detect, anonymously identify and/or track the subjects in the environment 100, preferably to determine the position over time of the subjects anonymously identified. Therefore, the reconciliation engine S134 is arranged in the first processing module S130. Preferably, the storage S132 is arranged in the first processing module S130. Preferably, the advanced processing engine S133 is arranged in the first processing module S130. The second processing module S140 uses the output of the first processing module S130 to do analytics, to interact with the user, to create notification, to detect events and/or to process the output of the first processing module S130 in any other way. Thus, the second processing module S140 comprises preferably the analytics engine S141, the input interface, the output interface, the notification engine S143, the event detector S144 and/or any other means for processing the output of the first processing module S130.

The shown embodiment in Fig. 4 uses thus a system S100 with three, preferably four layers. A sensor layer with the at least one sensor module S110 or sensor unit. A pre-processing layer with the at least one pre-processing module S120 or pre-processing unit. A third layer with the second processing means which processes the outcome of the pre-processing modules S120. The third layer could be preferably be split into a third layer with the first processing module S130 and a fourth layer with the second processing module S140. Obviously, alternative architectures are also possible. For example, the system S100 could be organized in two layers with a sensor layer and a central processing layer.

The environment, the first method, the second method, the computer program, the computer program product, the processing means and/or sensor module according to the invention is for the sake of brevity not described in detail. They work analogously to the system described before in detail.

It should be understood that the present invention is not limited to the described embodiments and that variations can be applied without going outside of the scope of the appended claims

## Claims

1. System for anonymously detecting a plurality of subjects in an environment (100), said system comprising:
- A sensor module (S110) comprising at least one sensor (S112, S113, S114), wherein the at least one sensor (S112, S113, S114) comprises a camera (S112) for capturing images of the environment (100);
- A processing means (S120, S130) configured to detect subjects in the environment based on the images of the environment (100) captured by the camera (S112) of the sensor module (S110);
- **characterized in that** the camera (S112) of the sensor module (S110) is a low-resolution camera.

2. System according to the previous claim, wherein the camera (S112) has a resolution lower than 0.3 megapixels.

3. System according to one of the previous claims, wherein the camera (S112) is an optical camera in the spectrum of visible light.

4. System according to one of the previous claims, wherein said sensor module (S110) further comprises a 3D camera (S113) for capturing 3D images of the environment (100), and the processing means is configured to detect the subjects in the environment (100) based on the images of the environment (100) captured by the camera (S112) of the sensor module (S110) and based on the 3D images of the environment captured by the 3D camera (S113) of the sensor module (S110).

5. System according to one of the previous claims, wherein said sensor module (S110) further comprises an infrared camera (S114) for capturing infrared images of the environment (100), and the processing means is configured to detect the subjects in the environment based on the images of the environment captured by the camera (S112) of the sensor module (S110) and based on the infrared images of the environment captured by the infrared camera (S114) of the sensor module (S110).

6. System according to claim 4 and 5, wherein the processing means is configured to detect the subjects in the environment (100) based on the images of the environment captured by the camera (S112) of the sensor module (S110), based on the infrared images of the environment captured by the infrared camera (S114) of the sensor module (S110) and based on the 3D images of the environment captured by the 3D camera (S113) of the sensor module (S110).

7. System according one of the previous claims, wherein the processing means is configured to associate to each subject detected in the environment an identifier for anonymously identifying the respective subject and to track each subject identified by its associated identifier in the environment.

8. System according one of the previous claims, wherein the processing means comprises a first processing means (S120) for pre-processing the data received from the at least one sensor (S112, S113, S114) of the sensor module and a second processing means (S130, S140), wherein the first processing means (S112) is configured to detect subjects in the environment based on the images of the environment captured by at least one sensor (S112, S113, S114) of the sensor module (S110) and to determine a pre-processing output with the position of the detected subjects in the environment (100), preferably with the tracked position and/or the tracking path of the subjects anonymously identified in the environment (100), wherein the second processing means (S130) performs further processing based on the pre-processing output.

9. System according to claim 8 comprising at least two of said sensor modules (S110) and at least two of said first processing means (S120), wherein each of the at least two first processing means (S120) receives the data of the at least one sensor (S112, S113, S114) of at least one sensor module (S120) of the at least two sensor modules (S120) to determine the pre-processing output, wherein the second processing means (S130) comprises a combining module (S134) configured to receive the pre-processing output of the at least two first processing means (S120) and to combine the pre-processing outputs of the at least two first processing means (S120) to a combined output detecting the subjects in the environment (100), preferably for tracking the subjects anonymously identified in the environment (100).

10. System according to claim 9, wherein each first processing means (S120) is configured to receive and pre-process the data from the sensor module (S110) of a different sub-region (100.i) of the environment (100), wherein the second processing means (S130) is configured to combine the pre-processing outputs of the different sub-regions to a combined output of the combined sub-regions (100.i) of the environment (100).

11. System according to one of claims 8 to 10, wherein the first processing means (S120) is configured to receive the data from at least two sensor modules (S110).

12. System according to one of the previous claims, wherein the processing means is configured to detect an event for a certain subject, wherein the event has an associated event location in the environment (100) and an associated event time, wherein the event is associated to the subject based on the event and based on the location of the subjects in the environment at the time associated with the event.

13. Environment with a system according to one of the previous claims.

14. Method for anonymously detecting a plurality of subjects in an environment (100), said method comprising the steps of:
- Capturing with at least one sensor (S112, S113, S114) of a sensor module (S110) arranged in the environment at least one image of the environment (100);
- Detecting, in a processing means (S120, S130), subjects in the environment (100) based on the images of the environment (100);
**characterized in that** the at least one sensor (S112, S113, S114) of the sensor module (S110) comprises a low resolution camera (S112).

15. Computer program for anonymously detecting a plurality of subjects in an environment (100), said computer program being configured to perform the following steps, when executed on a processing means:
- Receiving, in the processing means, from a sensor module (S110) with at least one sensor (S112, S113, S114) at least one image of the environment (100);
- Detecting, in the processing means (S120, S130), subjects in the environment (100) based on the images of the environment (100);
**characterized in that** the at least one image of the environment (100) comprises an image from a low resolution camera (S112).
